# EUROPEAN PATENT APPLICATION

(11) **EP 4 745 519 A1**
(43) Date of publication of application: **20.05.2026**
(21) Application number: 25804576.4
(22) Date of filing: 14.02.2025
(51) Int. Cl.: G01B 11/26, G06T 7/00, G06N 3/08

(54) **IMAGE GENERATION SYSTEM FOR ALIGNMENT ERROR DETERMINATION, ALIGNMENT ERROR DETERMINATION SYSTEM INCLUDING SAME, AND ALIGNMENT ERROR DETERMINATION METHOD USING SAME**

(30) Priority: 14.08.2024 KR 20240109309
(71) Applicant: Korea Institute of Machinery & Materials, Daejeon 34103 (KR)
(72) Inventor: CHO, Hyunmin, Sejong 30147 (KR); CHANG, Wonseok, Daejeon 35219 (KR); LEE, Won-sub, Incheon (KR); KIM, Seok, Changwon-si, Gyeongsangnam-do 51459 (KR); CHO, Youngtae, Changwon-si, Gyeongsangnam-do 51427 (KR)
(74) Representative: Lewis Silkin LLP
(86) International application number: PCT/KR2025/099374
(87) International publication number: WO 2026/038941

(57) **Abstract**

In an image generation system for determining an alignment error, an alignment error determination system including the image generation system, and an alignment error determination method using the alignment error determination system are disclosed. The image generation system includes an image generation unit configured to generate an image for determining an alignment state of a head portion of an optical system. The image generation unit is configured to design an image for analyzing an alignment error of the head portion or for separating alignment errors of the head portion according to degrees of freedom, based on a learning result with respect to images corresponding to alignment errors of the head portion.

## Description

### BACKGROUND OF THE INVENTION

### TECHNICAL FIELD

The present invention relates to an image generation system for determining an alignment error, an alignment error determination system including the image generation system, and an alignment error determination method using the alignment error determination system. More particularly, the present invention relates to an image generation system for determining an alignment error, an alignment error determination system including the image generation system, and an alignment error determination method using the alignment error determination system, which are configured to determine an alignment state between a substrate and an image or an alignment state including causes of alignment errors between multiple images in an image projection optical system such as a digital micro-mirror device (DMD).

### DISCUSSION OF THE RELATED ART

In general, an image projection optical system such as a digital micro-mirror device (DMD) or a liquid crystal on silicon (LCOS) is being increasingly utilized in various applications. For example, as disclosed in Korean Patent Publication No. 10-2023-0087629, such an optical system is used to project an image onto a substrate for a photolithography process, and as described in Korean Patent No. 10-1199496, it is also applied to projection displays for large-area images. Recently, the range of applications of such systems has been expanding.

However, in the case of the image projection optical system, the size of a projected image is inherently limited, and therefore, the area of an image that may be generated by a single image projection optical system is restricted. Accordingly, in order to implement a large-area image, a method has been applied in which images generated by a single image projection optical system are stitched together, or a plurality of single image projection optical systems are aligned to simultaneously project multiple images.

Nevertheless, when implementing a large-area image as described above, when stitching is performed between images, or when images generated from a plurality of optical systems are overlapped and connected to each other, precise alignment between the optical systems must be achieved in order to ensure a seamless connection between the images.

However, due to various factors, it is difficult to perform accurate alignment between the optical systems. Accordingly, a technology capable of accurately determining or analyzing an alignment state and an alignment error between the optical systems is required. In the current state of the art, however, the alignment state is merely determined by analyzing overlapped images themselves, which results in a long processing time and low accuracy in determining the alignment state.

Related prior-art documents include Korean Patent Publication No. 10-2023-0087629 and Korean Registered Patent No. 10-1199496.

### SUMMARY

Accordingly, the technical task of the invention is derived from these points, and exemplary embodiments of the present invention provide an image generation system for determining an alignment error that may more accurately determine an alignment state, including causes of alignment errors between multiple images or between a substrate and an image in an image projection optical system such as a digital micro-mirror device (DMD), thereby minimizing alignment errors of the optical system.

In addition, exemplary embodiments of the present invention also provide an alignment error determination system including the image generation system.

In addition, exemplary embodiments of the present invention also provide an alignment error determination method using the alignment error determination system.

According to one aspect of the present invention, the image generation system includes an image generation unit configured to generate an image for determining an alignment state of a head portion of an optical system. The image generation unit is configured to design an image for analyzing an alignment error of the head portion or for separating alignment errors of the head portion according to degrees of freedom, based on a learning result with respect to images corresponding to alignment errors of the head portion.

In one example embodiment, the alignment error of the head portion may include an alignment error with respect to a reference optical system of the head portion, an alignment error with respect to an alignment mark of the head portion, or an alignment error between a pair of adjacent head portions.

In one example embodiment, the image generation unit may design at least one image for analyzing an alignment error with respect to the reference optical system of the head portion, an alignment error with respect to the alignment mark of the head portion, or an alignment error between a pair of adjacent head portions. When the number of images is two or more, the images may be sequentially continuous in a time series.

In one example embodiment, the alignment error of the head portion may include a translational error in at least one of first to third directions perpendicular to each other, a rotational error about at least one of the first to third directions, or an error including both the translational error and the rotational error simultaneously.

In one example embodiment, the image generation unit may design an image for analyzing only one of the alignment errors of the head portion, or may design an image for simultaneously analyzing at least two alignment errors of the head portion, or may design an image for separating alignment errors by degree of freedom while simultaneously analyzing at least two alignment errors.

In one example embodiment, the image generation unit may include a first image acquisition unit configured to provide an image for analyzing only one alignment error or an image for separating alignment errors by degree of freedom to a learning unit, and a first image design unit configured to design the image for analyzing only one alignment error or the image for separating alignment errors by degree of freedom based on a learning result of the learning unit.

In one example embodiment, the image generation unit may include a second image acquisition unit configured to provide an image for simultaneously analyzing at least two alignment errors to the learning unit, and a second image design unit configured to design an image for simultaneously analyzing at least two alignment errors based on the learning result of the learning unit and the image for separating alignment errors by degree of freedom designed by the first image design unit.

In one example embodiment, the image generation unit may design the image while varying at least one of a shape of the image, a size of the image, a gradient of the image, aperiodicity of image arrangement, and periodicity of image arrangement.

In one example embodiment, the shape of the image may be any one of a polygonal shape, a circular shape, an elliptical shape, or a sector shape.

In one example embodiment, the system may further include a learning unit configured to learn a relationship between images corresponding to alignment errors of the head portion and fast Fourier transform (FFT) results of the images corresponding to the alignment errors.

In one example embodiment, the image generation unit may generate an image for determining an alignment state of the head portion of the optical system based on interdependence between the images corresponding to alignment errors and FFT results thereof.

In one example embodiment, the image may be an image generated as an inverse fast Fourier transform (IFFT) result of an image generated as an FFT result, or an FFT result image of an image for analyzing the alignment error of the head portion, or an FFT result image of an image for separating alignment errors by degree of freedom of the head portion.

In one example embodiment, the learning unit may include an image processing unit configured to perform a predetermined processing and transformation on the images corresponding to alignment errors, and a learning execution unit configured to perform machine learning or deep learning on the images processed and transformed by the image processing unit.

In one example embodiment, the learning unit may perform learning by using a neural operator method.

According to another aspect of the present invention, an alignment error determination system includes the image generation system, an optical system, and an alignment determination unit. The optical system captures the image designed by the image generation system to generate a captured image. The alignment determination unit determines an alignment state of a head portion of the optical system based on the captured image.

In one example embodiment, the optical system may be applied to a digital micro-mirror device (DMD), a liquid crystal on silicon (LCOS), a light emitting display (LED), a liquid crystal display (LCD), a nano-imprint head, an inkjet printing head, or an image modulation or non-modulation head.

In one example embodiment, the system may further include an error extraction unit configured to extract an alignment error of the head portion of the optical system based on the captured image, and the error extraction unit may include an FFT conversion unit configured to perform a fast Fourier transform on the captured image.

In one example embodiment, the learning unit may include an image determination unit configured to regenerate an image by applying a pre-learned result to an FFT result of the captured image, and the error extraction unit may extract the alignment error of the head portion based on the regenerated image.

According to still another aspect of the present invention, an alignment error determination method includes designing an image for analyzing an alignment error of a head portion or for separating alignment errors of the head portion according to degrees of freedom based on a learning result with respect to images corresponding to alignment errors of the head portion, capturing the designed image in an optical system to generate a captured image, and determining an alignment state of the head portion of the optical system based on the captured image.

In one example embodiment, the method may further include, prior to the step of designing the image, learning a relationship between images corresponding to alignment errors of the head portion and fast Fourier transform (FFT) results of the images corresponding to the alignment errors.

According to exemplary embodiments of the present invention, in an optical system performing image projection, an alignment state in an overlap region between an image obtained from a substrate portion and an image obtained from an adjacent head portion may be determined in real time. Accordingly, based on the alignment error of the optical system, not only may alignment between the substrate portion and the head portion be more accurately performed, but errors in image stitching through adjacent head portions may also be minimized, and correction of the alignment state may be achieved.

Particularly, the determination of the alignment state is performed based on a fast Fourier transform (FFT) result of an obtained image. Thus, an image may be designed that can more precisely and accurately represent the alignment state inversely from an FFT result, and by determining the alignment state based on the designed image, the precision and accuracy of alignment determination may be improved.

That is, by pre-learning a relationship between images corresponding to alignment errors of the head portion and FFT results for each alignment error image, an image may be designed that is optimal for deriving a specific alignment error from an FFT result, and the alignment state may be determined based on the designed image.

Of course, the learning result of the learning unit may also be utilized in a process of determining the alignment state by performing an FFT on an image obtained with the designed image of the head portion, thereby improving the speed and accuracy of the alignment determination.

In this case, in designing the image, an image may be designed to clearly represent each of six degrees of freedom (DOF) errors, or an image may be designed to most effectively represent at least two or all six DOF errors, so that the alignment state of the head portion may be accurately and rapidly determined.

In this case, an image for separating alignment errors corresponding to each of the six degrees of freedom may also be designed, so that when determining the alignment state of the head portion from an image having multiple degrees of freedom, faster and more accurate determination may be achieved.

That is, based on the learning result of the learning unit, features of FFT results corresponding to alignment errors of an alignment image may be learned, and these features may be inversely used to design an image capable of most easily revealing a specific DOF error on the FFT result, an image capable of separating alignment errors for each DOF, or an image capable of revealing multiple DOFs. Accordingly, not only a specific degree of freedom but also a combined degree of freedom may be more accurately determined. Particularly, for real-time and rapid determination of the alignment state, it is necessary to design an image that may most easily reveal at least two or all six DOF errors. At this time, by also designing and providing an image capable of separating and extracting each degree of freedom, not only may an error be collectively revealed from a combined degree of freedom, but each DOF error may also be individually revealed from the combined degree of freedom, thereby enabling real-time and rapid alignment determination.

In this case, since the designed image may be derived by varying at least one of a shape of the image, a size of the image, a deformation (gradient) of the image, or aperiodicity or periodicity of image arrangement according to the characteristics of FFT results, complexity and time required for the image design may be minimized.

Furthermore, even in extracting errors from an actually captured image, a so-called image regeneration process may be performed in which an FFT result of the captured image is provided to the learning unit, and noise is removed and an image suitable for alignment error analysis is optimized through an image determination unit. By extracting the error based on the regenerated image, more accurate alignment determination may be achieved.

### BRIEF DESCRIPTION OF THE DRAWINGS

FIG. 1 is a block diagram illustrating an alignment error determination system according to an example embodiment of the present invention;
FIG. 2A is a schematic view illustrating a state in which an image is captured by using the optical system of FIG. 1, and FIG. 2B shows examples of images captured by the optical system of FIG. 3A;
FIGS. 3A to FIG. 3D show examples of images captured according to types of alignment errors of the optical system of FIG. 2A;
FIG. 4A illustrates an example in which captured images of FIG. 2B are overlapped and subjected to FFT conversion, FIG. 4B shows an example of FFT conversion results according to characteristics of captured images of FIG. 1, and FIG. 4C illustrates examples of types of FFT conversions obtained from the captured images of FIG. 1;
FIG. 5 is a flowchart illustrating steps of processing images in an image processing unit of a learning unit of FIG. 1;
FIG. 6 is a schematic view showing an example of images extracted through an image generation system of FIG. 1 and corresponding FFT conversion results;
FIG. 7A illustrates an example of an image designed by considering characteristics of FFT conversion results through the image generation system of FIG. 1, and FIGS. 7B and 7C are graphs illustrating improved results of alignment error extraction; and
FIG. 8 is a flowchart illustrating an alignment error determination method using the alignment error determination system of FIG. 1.

**<Reference numerals>**

| | | | |
|---|---|---|---|
| 10: | Alignment Error Determination System | 200: | Image Generation System |
| 100: | Learning Unit | 110: | Image Learning Unit |
| 120: | Image Processing Unit | 130: | Learning Execution Unit |
| 140: | Image Determination Unit | 300: | Image Generation Unit |
| 310: | First Image Acquisition Unit | 320: | First Image Design Unit |
| 330: | Second Image Acquisition Unit | 340: | Second Image Generation Unit |
| 400: | Optical System | 410: | Head Portion |
| 500: | Error Analysis Unit | 510: | FFT Conversion Unit |
| 520: | Error Extraction Unit | 600: | Alignment Determination Unit |

### DETAILED DESCRIPTION OF THE INVENTION

The present invention may be modified in various ways and may take different forms, therefore, specific embodiments will be described in detail in the specification. However, the disclosure is not intended to limit the invention to the particular forms described, and it should be understood to include all modifications, equivalents, and alternatives that fall within the spirit and scope of the invention. In the drawings, similar reference numerals designate corresponding elements, and terms such as "first," "second," etc. are merely used to distinguish one element from another, and are not intended to limit the scope of the invention.

The terminology used in the present application is for the purpose of describing particular embodiments only, and is not intended to limit the invention. Unless the context clearly indicates otherwise, the singular forms include the plural.

As used herein, the terms "include" and "consist of" indicate the presence of features, numerals, steps, operations, elements, parts, or combinations thereof described in the specification, but do not preclude the possibility of the presence or addition of one or more other features, numerals, steps, operations, elements, parts, or combinations thereof.

Unless otherwise defined, all terms used herein, including technical and scientific terms, have the same meanings as commonly understood by one of ordinary skill in the art to which the present invention pertains. Terms defined in general dictionaries should be interpreted as having meanings consistent with the contextual meanings in the relevant technical field, and unless specifically defined in the present application, such terms should not be interpreted in an idealized or overly formal sense.

Hereinafter, the present invention will be explained in detail with reference to the drawings.

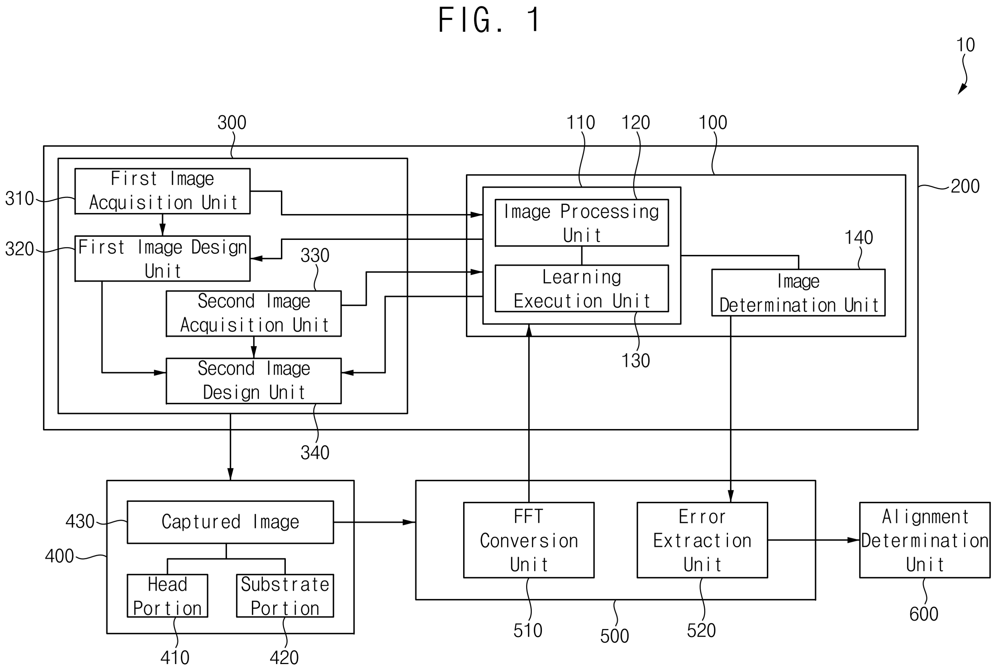

FIG. 1 is a block diagram illustrating an alignment error determination system according to an example embodiment of the present invention.

First, referring to FIG. 1, an alignment error determination system 10 according to the present example embodiment includes an optical system 400 and is a system configured to determine an alignment state of the optical system 400 based on an image obtained from the optical system 400.

At this time, a reason why the optical system 400 and an image obtained through the optical system 400 may have an alignment error will first be described with reference to subsequent drawings.

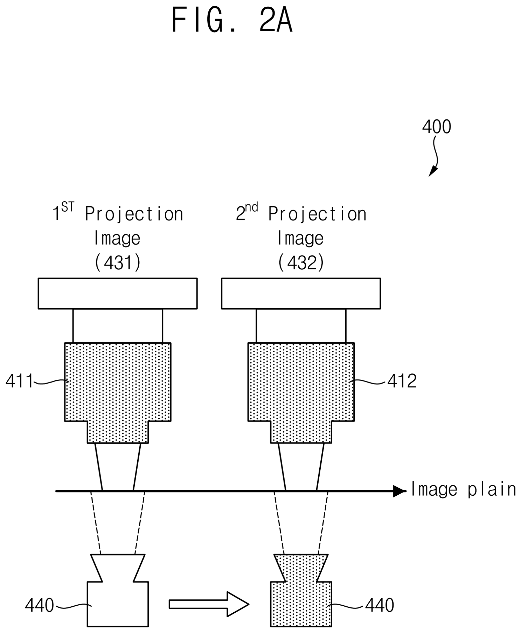

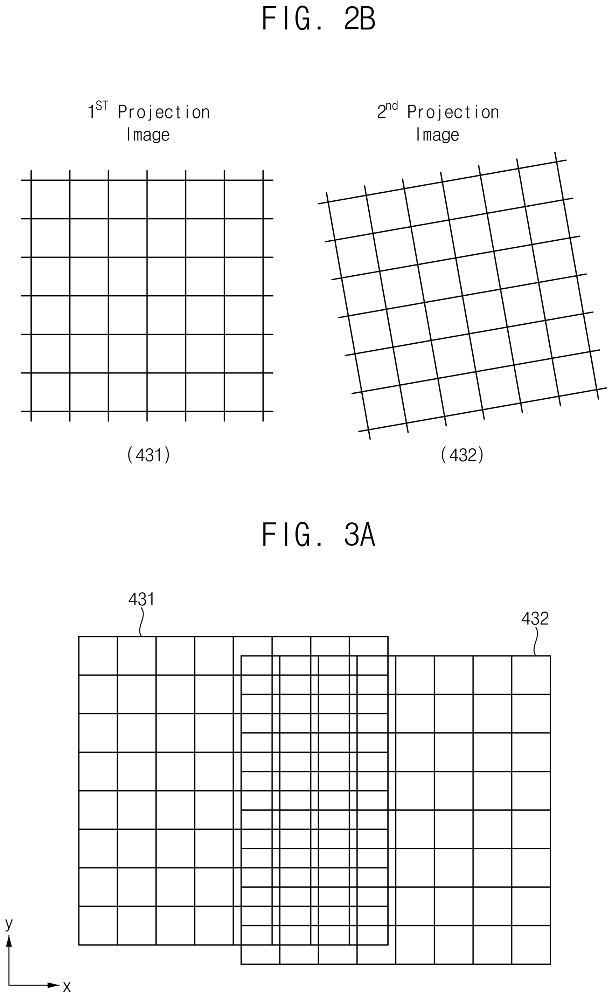

FIG. 2A is a schematic view illustrating a state in which an image is captured by using the optical system of FIG. 1, and FIG. 2B shows examples of images captured by the optical system of FIG. 3A.

First, referring to FIG. 1 and FIG. 2A, the optical system 400 according to the present example embodiment includes a head portion 410 and a substrate portion 420, and a captured image 430 is obtained through the head portion 410.

The optical system 400 is a so-called image projection optical system, which may be applied to a digital micro-mirror device (DMD), a liquid crystal on silicon (LCOS), a light emitting display (LED), or a liquid crystal display (LCD). Alternatively, the optical system 400 may also be applied to a nano-imprint head, an inkjet printing head, or an image modulation or non-modulation head. However, the optical system 400 is not limited thereto and may include various optical elements capable of generating or dynamically transforming an image.

In the image projection optical system 400, a predetermined projection image (i.e., captured image) 430 is generated with respect to an incident light source, and the generated projection image 430 may be projected onto the substrate portion 420 for use in a photolithography process or may be applied to a large-area image projection display such as a beam projector.

The projection image 430 generated through the head portion 410 of the optical system 400 is obtained through an image measurement stage 440.

Meanwhile, in the case of projection images generated through such an image projection optical system, when a large-area image is implemented, stitching between multiple projection images is required. During this stitching process, alignment errors may occur in an overlap region between the projection images. That is, when performing image stitching, a first image 431 and a second image 432 obtained from respective adjacent head portions 411 and 412 are overlapped and stitched to each other, and in this case, alignment errors may occur between the adjacent head portions. Although the drawings illustrate an alignment error between two adjacent head portions as an example, the present invention is not limited thereto, and it is obvious that such alignment errors may occur between multiple adjacent head portions whenever image stitching is required.

Accordingly, the alignment error determination system 10 according to the present example embodiment determines alignment errors occurring between such adjacent head portions.

In addition to alignment errors between multiple projection images, alignment errors of the head portion 410 with respect to a reference optical system or a reference alignment mark may also occur in the optical system 400. Therefore, the alignment error determination system 10 according to the present example embodiment may also determine alignment errors between the head portion and the reference optical system or the reference alignment mark. Furthermore, when a predetermined process is performed on the substrate portion 420, an alignment error may occur in an overlap region between the substrate portion and the projection image, i.e., the head portion, and such alignment errors may also be determined.

For convenience of explanation, an alignment error occurring between a pair of adjacent head portions 411 and 412 will be described below. It will be apparent that this explanation may be extended and applied to an alignment error with respect to the reference optical system or reference alignment mark, as well as an alignment error with respect to the substrate portion.

Referring to FIG. 2B, first and second captured images 431 and 432 captured from respective adjacent head portions 411 and 412 are not identical to each other and may include alignment errors.

Examples of alignment errors between the first and second captured images 431 and 432 are shown in the following drawings.

FIGS. 3A to FIG. 3D show examples of images captured according to types of alignment errors of the optical system of FIG. 2A.

Referring to FIG. 3A, a first captured image 431 and a second captured image 432 may be displaced along a first axis X and a second axis Y perpendicular to the first axis X, resulting in a translation error. In FIG. 3A, the second captured image 432 is illustrated as being displaced from the first captured image 431 along both the first axis X and the second axis Y, thereby generating an error. However, the alignment error may also occur when displacement occurs only along one of the first axis X or the second axis Y.

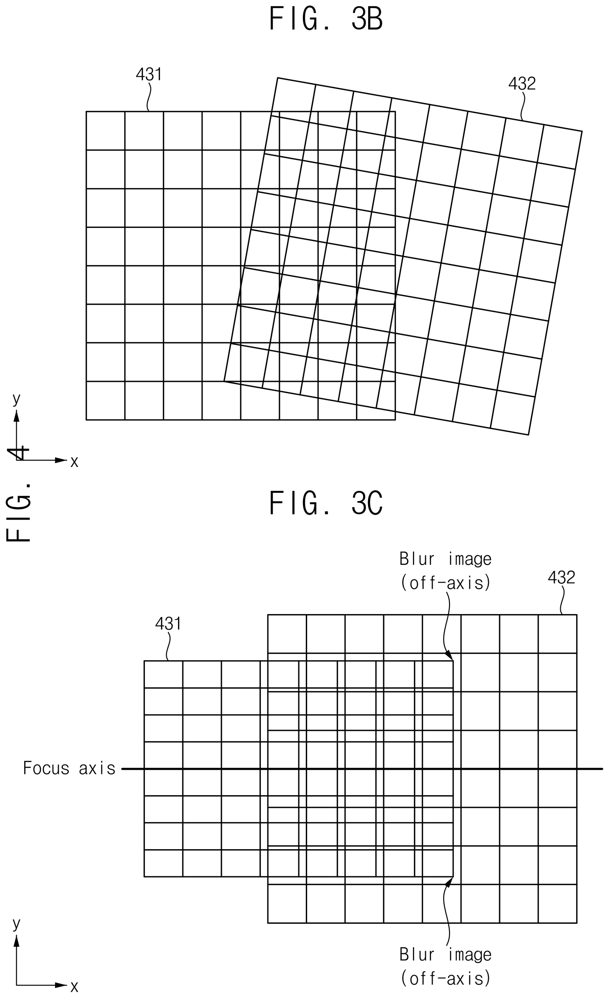

Referring to FIG. 3B, the first captured image 431 and the second captured image 432 may be rotated about a third axis Z perpendicular to both the first and second axes, resulting in a rotation error. Due to the rotation error about the third axis Z, the second captured image 432 may have an alignment error in which the image is rotated with respect to the first captured image 431 on the XY plane.

Referring to FIG. 3C, the first captured image 431 and the second captured image 432 may also be rotated about the first axis X, resulting in a rotation error. Due to the rotation error about the first axis X, the second captured image 432 may have an alignment error in which a length of the image in the direction of the second axis Y decreases with respect to the first captured image 431, and the image may appear blurred. Although not illustrated in FIG. 3C, the first captured image 431 and the second captured image 432 may also be rotated about the second axis Y, resulting in a rotation error.

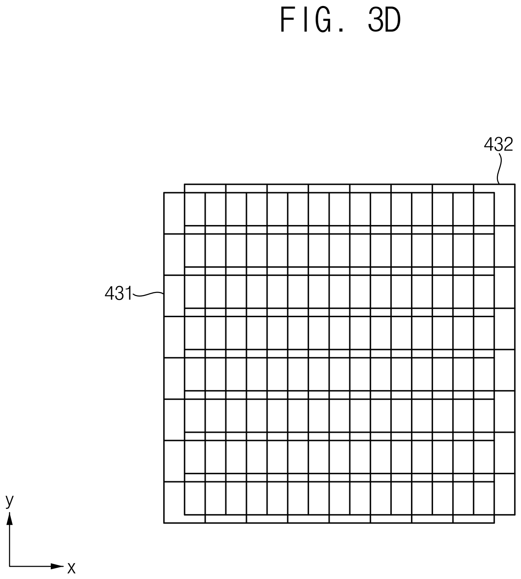

Referring to FIG. 3D, the first captured image 431 and the second captured image 432 may be displaced along the third axis Z, resulting in a translation error. Due to the translation error along the third axis Z, the first captured image 431 may appear blurred with respect to the second captured image 432 (or vice versa).

As illustrated in FIG. 3A to FIG. 3D, alignment errors in the overlap region may occur when translation occurs along at least one of the X, Y, and Z axes, or when rotation occurs about at least one of the X, Y, and Z axes.

In addition, such translation errors and rotation errors may occur individually or simultaneously, such that at least two or more of the total six errors may occur at the same time. As described above, the captured images 430 obtained by the optical system 400 may include various types of alignment errors.

Hereinafter, an error occurring in one degree of freedom will be described as a single-degree-of-freedom error, and an error occurring in two or more degrees of freedom will be described as a multi-degree-of-freedom error.

Accordingly, the alignment error determination system 10 according to the present example embodiment determines alignment errors that occur as described above. More specifically, the alignment error determination system 10 includes, in addition to the optical system 400 described above, an image generation system 200, an error analysis unit 500, and an alignment determination unit 600.

The image generation system 200 generates images necessary to determine the alignment errors described above in the alignment error determination system 10 and includes a learning unit 100, an alignment error selection unit 200, and an image generation unit 300.

The learning unit 100 learns a relationship between images corresponding to alignment errors of the head portion 410 of the optical system 400 and fast Fourier transform (FFT) results of the images corresponding to the alignment errors. The learning unit 100 includes an image learning unit 110 having an image processing unit 120 and a learning execution unit 130, and an image determination unit 140.

At this time, a state of transformation when an FFT is performed on the image will be described and illustrated with reference to the following drawings.

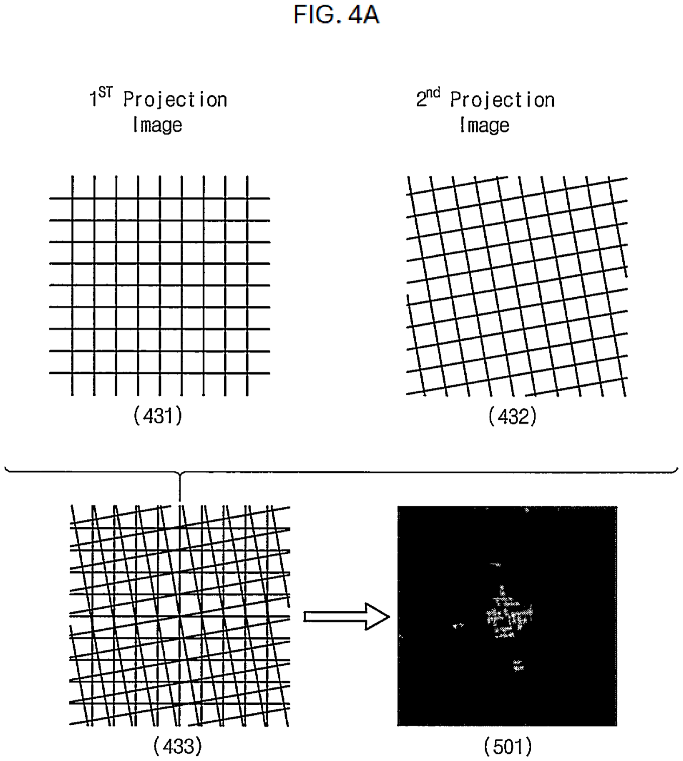

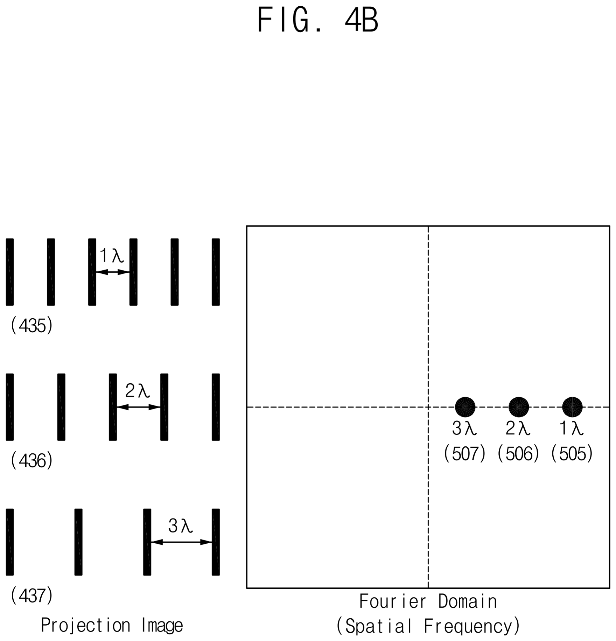

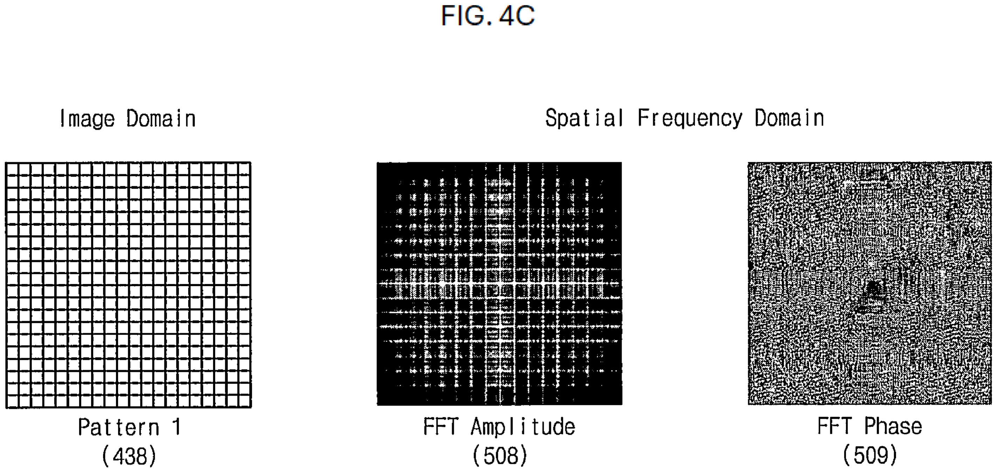

FIG. 4A illustrates an example in which captured images of FIG. 2B are overlapped and subjected to FFT conversion, FIG. 4B shows an example of FFT conversion results according to characteristics of captured images of FIG. 1, and FIG. 4C illustrates examples of types of FFT conversions obtained from the captured images of FIG. 1.

Referring first to FIG. 4A, as described with reference to FIG. 2A and FIG. 2B, projection images (captured images) 431 and 432 respectively obtained through first and second head portions 411 and 412 of the optical system 400 are acquired with different alignment states due to alignment errors of the first and second head portions 411 and 412.

At this time, the first and second head portions 411 and 412 capture the same reference image, but due to their respective alignment errors, different first and second captured images 431 and 432 are obtained as illustrated in FIG. 4A.

When the first and second captured images 431 and 432 thus obtained are overlapped with each other to obtain an overlapped image 433, and an FFT transformation is performed thereon, an FFT-transformed image 501 is obtained.

That is, the overlapped image 433 of the first and second captured images 431 and 432 is transformed into an FFT-transformed image 501 including specific points or specific shapes, and the FFT-transformed image 501 contains relatively less information than the overlapped image 433. Accordingly, by analyzing the FFT-transformed image 501, the characteristics of the overlapped image 433 - namely, alignment error information between the first and second captured images 431 and 432 included in the overlapped image 433 - may be obtained more easily.

For example, referring to FIG. 4B, when captured images 435, 436 and 437 include patterns having intervals of 1λ, 2λ and 3λ, respectively, FFT transformation of each image produces FFT-transformed images 505, 506 and 507, which appear as points at different positions in the FFT domain.

Accordingly, interpreting the information contained in the FFT-transformed image makes it easier to analyze the information of the captured image than interpreting the information directly from the captured image itself.

Meanwhile, referring to FIG. 4C, methods of generating such FFT-transformed images include generating an FFT-transformed image 508 through amplitude transformation of a captured image 438, or generating an FFT-transformed image 509 through phase transformation.

As described above, a specific relationship exists between the captured image and the FFT-transformed image obtained by transforming it. The learning unit 100 learns a relationship between a captured image acquired through the head portion 410 of the optical system 400 and an FFT transformation result of the captured image.

Particularly, even when the captured image is obtained with respect to the same reference image, the captured image obtained through the head portion 410 includes alignment errors due to alignment errors between adjacent head portions, and therefore, the FFT transformation result also includes alignment error information corresponding to the captured image.

Accordingly, the learning unit 100 learns relationships between each alignment-error-specific image obtained so as to include one or at least two or more alignment errors among the alignment errors described with reference to FIG. 3A to FIG. 3D, and FFT results corresponding to each alignment-error-specific image.

The alignment-error-specific image may be an image including one of the six degrees of freedom (single-degree-of-freedom alignment error image) or may be an image including at least two or all of the six degrees of freedom (multi-degree-of-freedom alignment error image).

Therefore, the image learning unit 110 learns characteristics of FFT results according to the alignment errors between each alignment-error-specific image and its FFT result. Such learning may be performed by machine learning or deep learning, and particularly, the image learning unit 110 may use neural operator methods such as a Deep Operator Network (DeepONet) or a Fourier Neural Operator (FNO).

Although not illustrated, images having one alignment error among the six degrees of freedom, as well as images having at least two or all of the six-degree-of-freedom alignment errors, may be stored in a database of the image learning unit 110.

The images including the alignment errors may be captured images obtained by photographing a reference image through the head portion 410 having an actual alignment error, or may be virtual images generated by artificially assuming possible alignment errors of the head portion 410.

In addition, the database stores FFT transformation results of the stored images as illustrated in FIG. 4C. That is, FFT transformation results of images having one alignment error among the six degrees of freedom (single-degree-of-freedom FFT-transformed image), as well as FFT transformation results of images having at least two or all of the six alignment errors (multi-degree-of-freedom FFT-transformed image), are stored together.

Accordingly, the learning execution unit 130 performs learning on relationships between images having alignment errors and FFT transformation results of the images stored in the database.

Meanwhile, the image processing unit 120 performs predetermined preprocessing on the FFT transformation results obtained as in FIG. 4C so that effective learning may be performed in the learning execution unit 130.

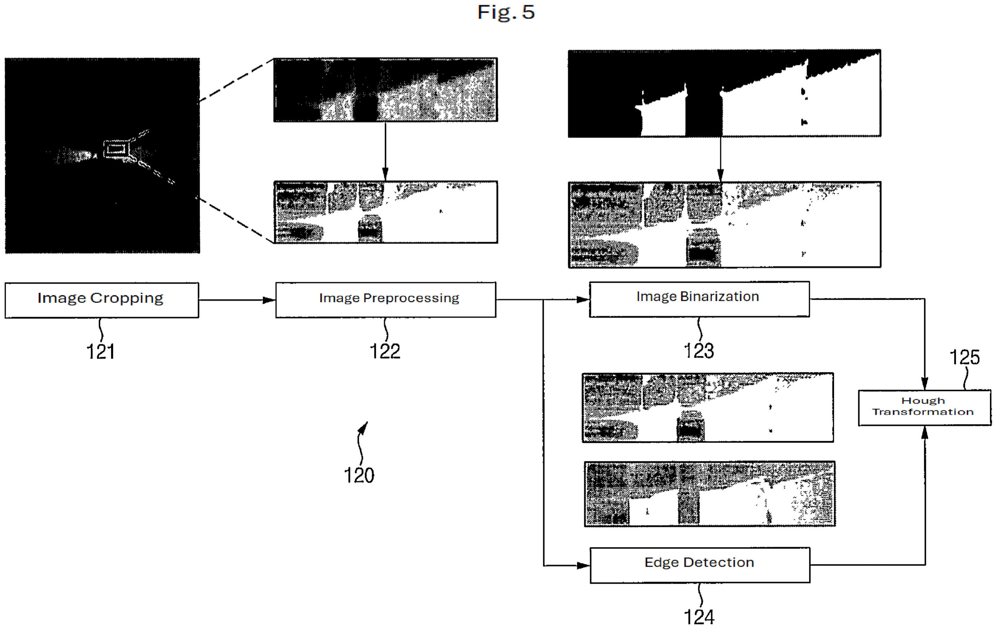

FIG. 5 is a flowchart illustrating steps of processing images in an image processing unit of a learning unit of FIG. 1.

Referring to FIG. 5, the image processing unit 120 performs predetermined image processing on the FFT transformation result of the captured image so that the learning execution unit 130 may perform learning more effectively.

As described above, the captured image 438 may be obtained in a spatial frequency domain as amplitude 508 or phase 509 by performing the fast Fourier transform. However, the present invention is not limited thereto, and the captured image may also be obtained as a power spectrum or a Nyquist plot.

In the case of the FFT-transformed image derived in the spatial frequency domain, after predetermined image processing is performed through the image processing unit 120, the processed image is stored in a database, whereby analysis of the FFT-transformed image becomes easier. Examples of such image processing include techniques such as sharpening, histogram equalization, unsharp masking, image pyramids, multi-scale feature extraction, brightness adjustment, contrast adjustment, and gamma correction.

Accordingly, as illustrated in FIG. 5, for example, the image processing unit 120 may perform cropping 121 on the FFT-transformed image, perform pre-processing 122, perform binarization 123 or edge detection 124, and then perform a Hough transform 125.

However, the image processing unit 120 is merely exemplary, and processing of the FFT-transformed image may be performed in a form necessary for learning in the learning execution unit 130.

The image generation unit 300 designs an image that may induce alignment errors more accurately. In this case, the image generation unit 300 designs the image based on the learning result of the learning unit 100.

Specifically, the image generation unit 300 includes a first image acquisition unit 310, a first image design unit 320, a second image acquisition unit 330, and a second image design unit 340.

First, the first image acquisition unit 310 preliminarily collects images that induce a single-degree-of-freedom alignment error of the head portion 410 in order to perform learning of the learning unit 100. Here, as described above, the single-degree-of-freedom alignment error means any one selected from among the six alignment errors corresponding to six degrees of freedom.

Since the learning unit 100 has learned a relationship between the image having the single-degree-of-freedom alignment error and the FFT transformation result of the image, a single-degree-of-freedom image that yields the corresponding FFT transformation result may be selected or generated inversely based on the FFT transformation result of the image having the single-degree-of-freedom alignment error.

Therefore, through the first image acquisition unit 310, various images having a single-degree-of-freedom alignment error and single-degree-of-freedom FFT-transformed images as FFT transformation results thereof may be collected. The images collected as described above may ultimately serve as candidate images for an image designed by the first image design unit 320. Meanwhile, the first image acquisition unit 310 may collect the single-degree-of-freedom alignment error images and the corresponding single-degree-of-freedom FFT-transformed images through a database of an image learning unit 110.

Accordingly, the first image design unit 320 designs, based on the learning result of the image learning unit 110, an image that may more accurately reveal an alignment error of a specific degree of freedom, among the images collected through the first image acquisition unit 310, in comparison with other alignment errors.

In the first image design unit 320, among the images collected through the first image acquisition unit 310, an image that may most accurately reveal the alignment error of a specific degree of freedom may be designed by using the learning result of the image learning unit 110. Alternatively, the first image design unit 320 may separately generate an image that may most accurately reveal the alignment error of a specific degree of freedom by using the learning result of the image learning unit 110, based on characteristics of the images collected through the first image acquisition unit 310.

Thus, an image finally selected or generated by the first image design unit 320 may be an image that may most accurately determine a magnitude of the alignment error of a specific degree of freedom, and may be defined as a single-degree-of-freedom image.

In addition, the single-degree-of-freedom image finally selected or generated by the first image design unit 320 may be an image having characteristics of periodicity of image arrangement, as illustrated in FIG. 4B. That is, if a particular periodic arrangement of images (e.g., 1λ, 2λ, 3λ) is effective for determining an alignment error of a specific degree of freedom, an image having the corresponding periodic arrangement may be designed.

Alternatively, the single-degree-of-freedom image may be designed while varying a shape of the image, a size of the image, a gradient of the image, or aperiodicity of the image. That is, if a particular shape, size, or gradient is effective for determining an alignment error of a specific degree of freedom, a single-degree-of-freedom image having the corresponding characteristic may be designed. The shape of the image is not particularly limited and may include various shapes such as polygons including triangles, quadrilaterals, and pentagons, as well as circles, ellipses, or sector shapes.

Furthermore, the single-degree-of-freedom image finally selected or generated by the first image design unit 320 may be an image generated as an inverse fast Fourier transform (IFFT) result of an image generated as an FFT result. Alternatively, it may be an FFT result image of an image for analyzing an alignment error of the head portion, or an FFT result image of an image for separating alignment errors by degrees of freedom of the head portion.

As described above, the first image design unit 320 designs the single-degree-of-freedom image, and the single-degree-of-freedom image thus designed may be an optimal image for determining an alignment error of the specific degree of freedom.

Alternatively, the single-degree-of-freedom image designed by the first image design unit 320 may be an image capable of de-coupling alignment errors for respective degrees of freedom contained in a multi-degree-of-freedom image designed by a second image design unit 340 described later.

A multi-degree-of-freedom image may have two or more, and up to six, degrees of freedom. It may be difficult to extract errors for all degrees of freedom at once from such a multi-degree-of-freedom image. Therefore, by using the single-degree-of-freedom image designed by the first image design unit 320, alignment errors for respective degrees of freedom contained in the multi-degree-of-freedom image may be separated. To this end, the single-degree-of-freedom image to be designed may be optimized for such separation of alignment errors by degrees of freedom.

Furthermore, the single-degree-of-freedom image designed by the first image design unit 320 may be a single image at an arbitrary time point or may be a sequential image continuously arranged in a time series over a specific period. In the case of a sequential image arranged continuously in a time series, single-degree-of-freedom images are designed sequentially, and a plurality of single-degree-of-freedom images may be designed.

As described above, in designing an image through the first image design unit 320, an image for determining an alignment state of the head portion should be designed in consideration of a so-called interdependence between alignment-error-specific images and FFT results of the alignment-error-specific images. That is, an interdependence exists between a real image domain (alignment-error-specific image) and a spatial frequency domain obtained by performing an FFT (fast Fourier transform result).

Here, the interdependence means, for example, that the narrower a real image approaches a short pulse such as a Dirac delta function, the wider its spatial frequency band becomes (broad band), and conversely, the wider the image signal is, the narrower the spatial frequency band becomes (narrow band).

Meanwhile, the second image acquisition unit 330 preliminarily collects images that induce multi-degree-of-freedom alignment errors of two or more degrees of freedom, wherein the multi-degree-of-freedom alignment error refers to an alignment error including at least two degrees of freedom among the six degrees of freedom described above.

Since the learning unit 100 has learned a relationship between an image having a multi-degree-of-freedom alignment error and an FFT transformation result of the image, a multi-degree-of-freedom image that yields the corresponding FFT transformation result may be selected or generated inversely based on the FFT transformation result of the image having the multi-degree-of-freedom alignment error.

Accordingly, through the second image acquisition unit 330, various images having a multi-degree-of-freedom alignment error and multi-degree-of-freedom FFT-transformed images as FFT transformation results thereof may be collected. The images collected as described above may ultimately serve as candidate images for an image designed by the second image design unit 340. Meanwhile, the second image acquisition unit 330 may also collect the multi-degree-of-freedom alignment error images and the corresponding multi-degree-of-freedom FFT-transformed images through the database of the image learning unit 110.

Accordingly, the second image design unit 340 designs, based on the learning result of the image learning unit 110, an image that may more accurately reveal alignment errors of multiple degrees of freedom, among the images collected through the second image acquisition unit 330. In the second image design unit 340, among the images collected through the second image acquisition unit 330, an image that may most accurately reveal alignment errors of multiple degrees of freedom may be designed by using the learning result of the image learning unit 110. Alternatively, the second image design unit 340 may separately generate an image that may most accurately reveal alignment errors of multiple degrees of freedom by using the learning result of the image learning unit 110, based on characteristics of the images collected through the second image acquisition unit 330.

Thus, an image finally selected or generated by the second image design unit 340 may be an image that may most accurately determine a magnitude of alignment errors of multiple degrees of freedom, and may be defined as a multi-degree-of-freedom image. Moreover, the multi-degree-of-freedom image selected or generated by the second image design unit 340 may utilize the single-degree-of-freedom image selected or generated by the first image design unit 320.

As described above, since the first image design unit 320 may design, as the single-degree-of-freedom image, an image capable of separating alignment errors for respective degrees of freedom, the multi-degree-of-freedom image may be designed by utilizing such an image capable of separating alignment errors. Consequently, although the multi-degree-of-freedom image designed by the second image design unit 340 is an image for two or more degrees of freedom, it may, in effect, be an image designed in a separated manner for each degree of freedom.

Therefore, in subsequent execution of error extraction and alignment determination, error extraction and alignment determination may be performed for each separated degree of freedom, thereby improving accuracy and speed of alignment determination.

Meanwhile, characteristics of the multi-degree-of-freedom image selected or generated through the second image design unit 340 are the same as those of the single-degree-of-freedom image described above, and thus any repetitive description is omitted. Furthermore, the multi-degree-of-freedom image designed through the second image design unit 340 may be a single image at an arbitrary time point or may be a sequential image continuously arranged in a time series over a specific period. In the case of a sequential image arranged continuously in a time series, multi-degree-of-freedom images are designed sequentially, and a plurality of multi-degree-of-freedom images may be designed.

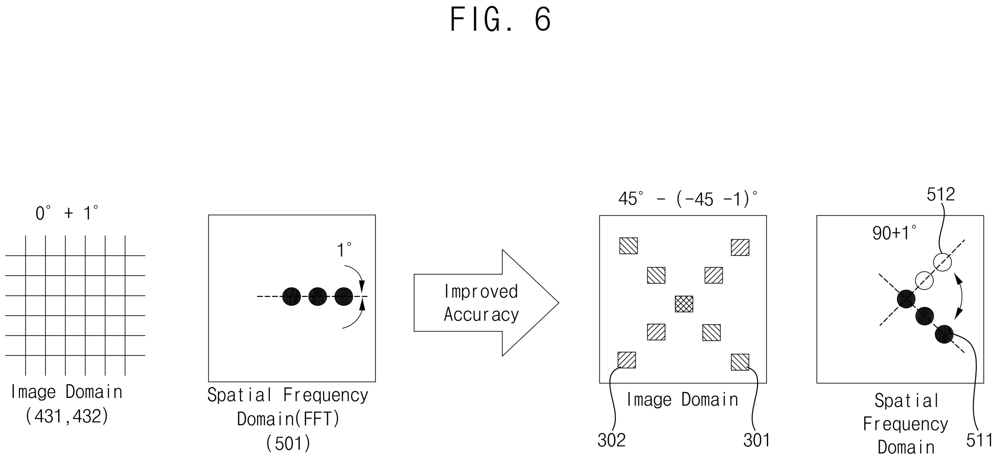

FIG. 6 is a schematic view showing an example of images extracted through an image generation system of FIG. 1 and corresponding FFT conversion results.

Referring to FIG. 6, when a pair of head portions has a predetermined alignment error (for example, a rotation error of 1° about the Z axis), even if FFT transformation is performed on output images 431 and 432 obtained through the head portions, the FFT transformation result 501 may indicate a relatively minor error related to the alignment error (rotation by 1° along an elongation axis). Accordingly, it may be difficult to accurately determine the alignment error between the head portions from the FFT transformation result alone.

However, when the image generation unit 300 designs images that may enable more accurate determination of a specific alignment error (for example, a rotation error about the Z axis) and the images 301 and 302 are subjected to FFT transformation, an FFT transformation result 511 may indicate a relatively very large error related to the alignment error (rotation by 90+1° along the elongation axis).

Therefore, by designing, through the image generation unit 300, an image from which a specific alignment error may be determined more accurately based on an FFT transformation result, the alignment error between the head portions may be determined more accurately.

In the present example embodiment, the alignment error includes an alignment error between a pair of adjacent head portions, an alignment error between one head portion and a reference optical system or a reference alignment mark, or an alignment error between a substrate portion and a head portion.

Accordingly, in all cases-determining an alignment error between head portions, between a head portion and a reference optical system, and between a substrate portion and a head portion-one image may be designed through the image generation unit 300 so that the alignment error may be determined. Here, one designed image means one single image, one composite image, sequential single images continuous in a time series, or sequential composite images continuous in a time series, i.e., an image designed with a single characteristic.

Particularly, in determining an alignment error between a pair of head portions, a single image may be designed as a reference image, captured images may be respectively obtained from the pair of head portions based on the designed reference image, and the alignment error between the head portions may be determined.

Alternatively, in determining an alignment error between the pair of head portions, different pairs of images may be designed as reference images, the respective reference images may be applied to the respective head portions to obtain captured images, and the alignment error between the head portions may be determined. In particular, when different reference images are designed in this manner, the images may be designed to more accurately reveal a specific alignment error.

As described above, when an image enabling accurate analysis of a specific alignment error is designed through the image generation unit 300, the optical system 400 obtains a captured image 430 based on the designed image.

The captured image 430 is provided to the error analysis unit 500.

The error analysis unit 500 performs a fast Fourier transform (FFT) on the captured image 430 obtained through the optical system 400 to extract an alignment error and includes an FFT conversion unit 510 and an error extraction unit 520.

The FFT conversion unit 510 performs an FFT on the captured image 430 obtained through the optical system 400 to obtain an FFT transformation result, and the FFT transformation result is as illustrated in the foregoing examples.

The error extraction unit 520 uses a learning result of the learning unit 100 to extract an alignment error of the head portion 410 based on the FFT transformation result.

In the present example embodiment, an FFT transformation result converted by the FFT conversion unit 510 is provided to an image determination unit 140 of the learning unit 100.

The image determination unit 140 applies a learning result of the image learning unit 110 to the FFT transformation result (image) converted by the FFT conversion unit 510 to obtain a regenerated image.

That is, the image determination unit 140 removes noise from the converted FFT-transformed image and optimizes the noise-removed FFT-transformed image into an image suitable for alignment error analysis. In optimizing the image suitable for alignment error analysis, a pre-learned result of the image learning unit 110 is applied. Accordingly, based on the pre-learned result, the FFT-transformed image is processed so that alignment error analysis may be performed more easily and accurately. Such re-learning-based optimization of the FFT-transformed image is performed, and the regenerated image is provided to the error extraction unit 520.

Thus, the error extraction unit 520 may extract an alignment error of the head portion 410 with respect to a reference optical system or a reference alignment mark, or may extract an alignment error between the head portion 410 and the substrate portion 420, based on the regenerated image. Furthermore, an alignment error between adjacent head portions 411 and 412 may also be extracted.

That is, through the error extraction unit 520, not only may an alignment error be extracted based on an FFT transformation result of one output image as illustrated above, but an alignment error may also be extracted based on an FFT transformation result in an overlap region of a pair of output images. In addition, alignment errors of a single degree of freedom as well as of multiple degrees of freedom may be extracted, and extraction may be performed for an alignment error at an arbitrary time as well as for a time-series alignment error continuous over a specific time.

The alignment determination unit 600 determines an alignment state of the optical system 400 based on an alignment error extraction result of the error analysis unit 500.

That is, based on the alignment error extracted by the error extraction unit 520, the alignment determination unit 600 determines an alignment state of the head portion 410, and further, determines an alignment state of the head portions 411 and 412. Specifically, the alignment determination unit 600 may determine a type and a magnitude of an alignment error of the head portion 410 with respect to a reference optical system or a reference alignment mark, and may determine a type and a magnitude of an alignment error of the head portion 410 with respect to the substrate portion 420. Furthermore, the alignment determination unit 600 may determine a type and a magnitude of an alignment error in an overlap region where the head portions 411 and 412 overlap with each other.

In the present example embodiment, since a reference image provided to obtain a captured image is an image designed to more effectively determine a specific alignment error (single-degree-of-freedom and multi-degree-of-freedom), the alignment determination unit 600 may place emphasis on determining the specific alignment error. However, since the head portion 410 may include an unexpected alignment error, various types of alignment errors may be determined in addition to the specific alignment error.

Results of determining alignment between the pair of first and second head portions 411 and 412 having, as the alignment error, a rotation error rotated by a predetermined angle α about the third direction Z by using the alignment error determination system 10 according to the present example embodiment will now be described by way of example.

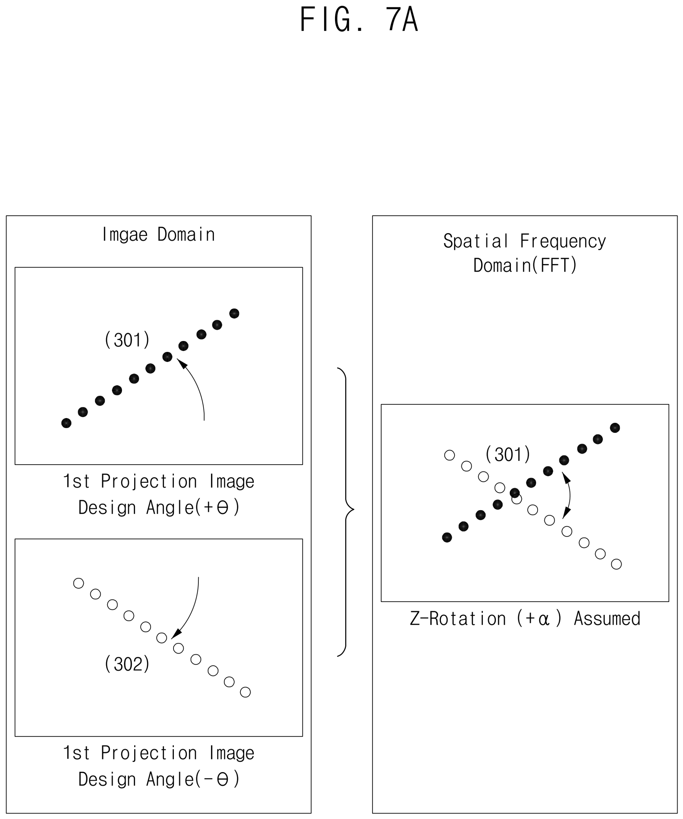

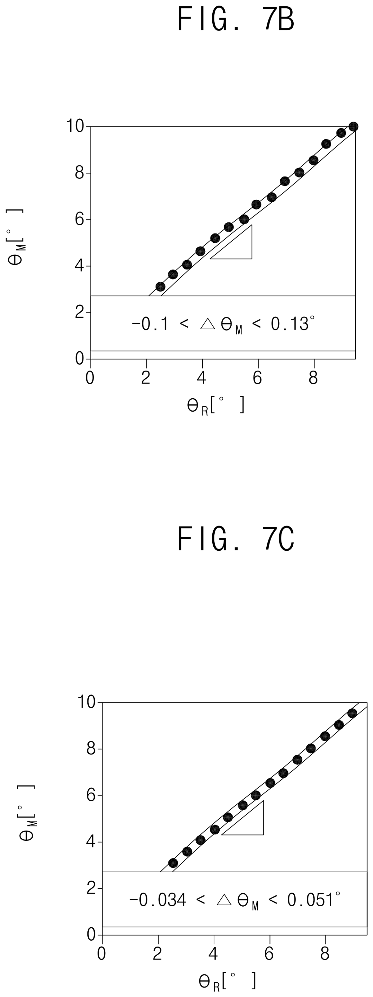

FIG. 7A illustrates an example of an image designed by considering characteristics of FFT conversion results through the image generation system of FIG. 1, and FIGS. 7B and 7C are graphs illustrating improved results of alignment error extraction.

Referring to FIG. 7A, a first captured image 301 may be obtained through the first head portion 411 and a second captured image 302 may be obtained through the second head portion 412 with respect to an image designed by the image generation unit 300.

At this time, as illustrated, the first and second captured images 301 and 302 may be obtained with predetermined different angles (+θ and -θ) because the images designed for the first and second head portions 411 and 412 are different from each other.

In addition, when the first and second head portions 411 and 412 have, as a predetermined alignment error, a rotation error of the predetermined angle α about the third axis Z, FFT transformation is performed on the first and second captured images 301 and 302, and the alignment error determined based on the FFT transformation result is shown in FIG. 7C.

Referring to FIG. 7B, when an FFT transformation is performed based on an arbitrary reference image without performing image design, and an alignment error is determined, the derived rotation error is within a range of -0.1° to 0.13°.

In contrast, as shown in FIG. 7C, when an alignment error is determined through the alignment error determination system 10 according to the present example embodiment-i.e., when the reference image is designed as an image capable of more effectively revealing a rotation error-the derived rotation error is within a range of -0.034° to 0.051°, confirming that the result of alignment error determination becomes more precise.

Through this, as in the present example embodiment, when the alignment error is determined using the designed image, the alignment state may be determined with higher precision and accuracy for a specific alignment error.

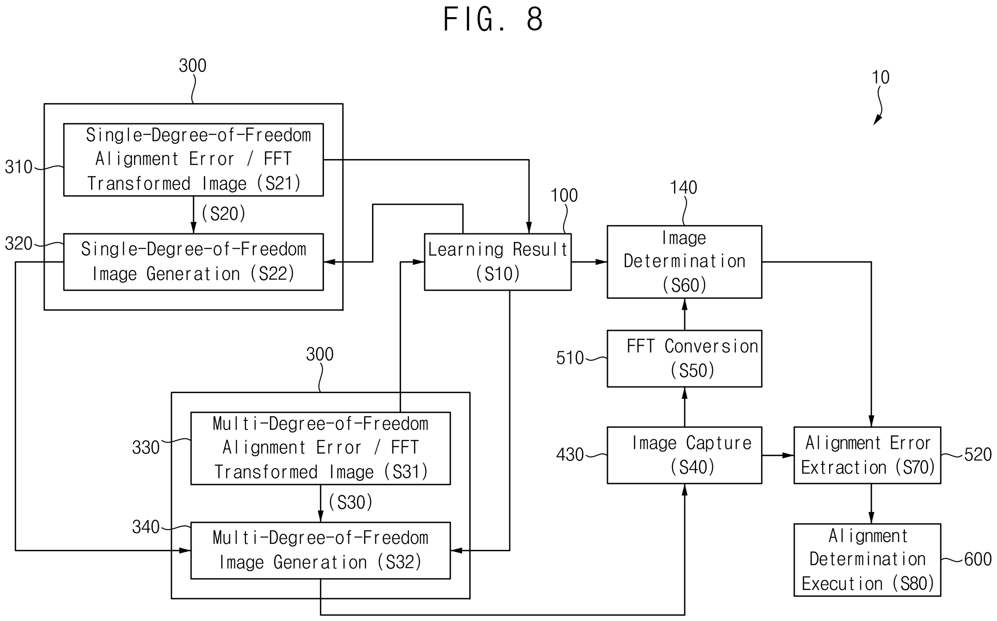

FIG. 8 is a flowchart illustrating an alignment error determination method using the alignment error determination system of FIG. 1.

Referring to FIG. 8, in the alignment error determination method using the alignment error determination system 10 of FIG. 1, first, the learning unit 100 learns a relationship between alignment-error-specific images of the head portion and fast Fourier transform (FFT) results of the alignment-error-specific images (step S10).

At this time, the alignment-error-specific images correspond to the images for each alignment error described with reference to FIG. 3A to FIG. 3D, and the learning unit learns relationships between each alignment-error-specific image and an FFT result thereof. Accordingly, pre-learning is performed in advance regarding characteristics of FFT transformation results for each alignment error when images having each alignment error are FFT-transformed.

Subsequently, through the image generation unit 300, an optimal image that may effectively reveal a specific alignment error is designed. The designed image may be a single-degree-of-freedom image (step S20) or a multi-degree-of-freedom image (step S30).

When the single-degree-of-freedom image is designed, a single-degree-of-freedom alignment-error image and a single-degree-of-freedom FFT-transformed image are provided to the learning unit 100 (step S21), and by using a learning result of the learning unit 100, the single-degree-of-freedom image is designed (step S22), as described above.

Similarly, when the multi-degree-of-freedom image is designed, a multi-degree-of-freedom alignment-error image and a multi-degree-of-freedom FFT-transformed image are provided to the learning unit 100 (step S31), and by using a learning result of the learning unit 100, the multi-degree-of-freedom image is designed (step S32), as also described above.

That is, the learning unit 100 has already learned a relationship between an image having a specific alignment error and an FFT transformation result of the image. Therefore, by inversely applying the learning result of the learning unit 100, an optimal image that may more effectively reveal a specific alignment error from an FFT transformation result may be designed.

The image thus designed may be an image that may effectively reveal one alignment error or may be an image that may simultaneously and effectively reveal two or more alignment errors among the six degrees of freedom errors including translational errors and rotational errors described with reference to FIG. 3A to FIG. 3D. Accordingly, an image that may effectively reveal all six degrees of freedom errors may also be designed. Furthermore, a combination of alignment errors constituting at least two or more alignment errors is not limited. Thus, two or more alignment errors may be selected only from among the translational errors, only from among the rotational errors, or arbitrarily from among all translational and rotational errors.

In addition, as described above, an image may also be designed so that the six degrees of freedom errors may be separated and each error may be analyzed individually.

Thus, using the image designed as described above, the captured image 430 is obtained through the optical system 400 (step S40). At this time, as described above, the captured image 430 obtained through the optical system 400 may be a single captured image, a pair of captured images, or sequential captured images continuous in a time series, and a type of such image may vary depending on a target whose alignment state is to be determined.

Thereafter, the captured image 430 is FFT-transformed again (step S50) and provided to the image determination unit 140 of the learning unit 100 (step S60). Accordingly, the image determination unit 140 reuses a learning result of the learning unit 100 to regenerate an image that is more optimized for alignment error analysis and provides the regenerated image to the error extraction unit 520. Then, the error extraction unit 520 extracts an error of the optical system 400 by using the regenerated image obtained from the FFT transformation result (step S70).

Subsequently, based on an error extraction result of the error analysis unit 500, the alignment determination unit 600 determines an alignment state of the optical system 400 (step S80). Of course, in determining the alignment state, since an image designed to more effectively reveal a specific alignment state is used, the determination mainly focuses on the degree of the specific alignment state, but the determination result may also include other alignment states.

According to exemplary embodiments of the present invention, in an optical system performing image projection, an alignment state in an overlap region between an image obtained from a substrate portion and an image obtained from an adjacent head portion may be determined in real time. Accordingly, based on the alignment error of the optical system, not only may alignment between the substrate portion and the head portion be more accurately performed, but errors in image stitching through adjacent head portions may also be minimized, and correction of the alignment state may be achieved.

Particularly, the determination of the alignment state is performed based on a fast Fourier transform (FFT) result of an obtained image. Thus, an image may be designed that can more precisely and accurately represent the alignment state inversely from an FFT result, and by determining the alignment state based on the designed image, the precision and accuracy of alignment determination may be improved.

That is, by pre-learning a relationship between images corresponding to alignment errors of the head portion and FFT results for each alignment error image, an image may be designed that is optimal for deriving a specific alignment error from an FFT result, and the alignment state may be determined based on the designed image.

Of course, the learning result of the learning unit may also be utilized in a process of determining the alignment state by performing an FFT on an image obtained with the designed image of the head portion, thereby improving the speed and accuracy of the alignment determination.

In this case, in designing the image, an image may be designed to clearly represent each of six degrees of freedom (DOF) errors, or an image may be designed to most effectively represent at least two or all six DOF errors, so that the alignment state of the head portion may be accurately and rapidly determined.

In this case, an image for separating alignment errors corresponding to each of the six degrees of freedom may also be designed, so that when determining the alignment state of the head portion from an image having multiple degrees of freedom, faster and more accurate determination may be achieved.

That is, based on the learning result of the learning unit, features of FFT results corresponding to alignment errors of an alignment image may be learned, and these features may be inversely used to design an image capable of most easily revealing a specific DOF error on the FFT result, an image capable of separating alignment errors for each DOF, or an image capable of revealing multiple DOFs. Accordingly, not only a specific degree of freedom but also a combined degree of freedom may be more accurately determined. Particularly, for real-time and rapid determination of the alignment state, it is necessary to design an image that may most easily reveal at least two or all six DOF errors. At this time, by also designing and providing an image capable of separating and extracting each degree of freedom, not only may an error be collectively revealed from a combined degree of freedom, but each DOF error may also be individually revealed from the combined degree of freedom, thereby enabling real-time and rapid alignment determination.

In this case, since the designed image may be derived by varying at least one of a shape of the image, a size of the image, a deformation (gradient) of the image, or aperiodicity or periodicity of image arrangement according to the characteristics of FFT results, complexity and time required for the image design may be minimized.

Furthermore, even in extracting errors from an actually captured image, a so-called image regeneration process may be performed in which an FFT result of the captured image is provided to the learning unit, and noise is removed and an image suitable for alignment error analysis is optimized through an image determination unit. By extracting the error based on the regenerated image, more accurate alignment determination may be achieved.

Having described exemplary embodiments of the present invention, it is further noted that it is readily apparent to those of reasonable skill in the art that various modifications may be made without departing from the spirit and scope of the invention which is defined by the metes and bounds of the appended claims.

## Claims

1. An image generation system comprising:
an image generation unit configured to generate an image for determining an alignment state of a head portion of an optical system,
wherein the image generation unit is configured to design an image for analyzing an alignment error of the head portion or for separating alignment errors of the head portion according to degrees of freedom, based on a learning result with respect to images corresponding to alignment errors of the head portion.

2. The image generation system of claim 1,
wherein the alignment error of the head portion comprises an alignment error with respect to a reference optical system of the head portion, an alignment error with respect to an alignment mark of the head portion, or an alignment error between a pair of adjacent head portions.

3. The image generation system of claim 2,
wherein the image generation unit is configured to design at least one image for analyzing the alignment error with respect to the reference optical system of the head portion, the alignment error with respect to the alignment mark of the head portion, or the alignment error between the pair of adjacent head portions,
wherein, when the number of the images is two or more, the images are sequentially continuous in a time series.

4. The image generation system of claim 2,
wherein the alignment error of the head portion comprises:
a translational error in at least one of first to third directions perpendicular to each other;
a rotational error about at least one of the first to third directions; or
an error having both the translational error and the rotational error simultaneously.

5. The image generation system of claim 1,
wherein the image generation unit is configured to design an image for analyzing only one of the alignment errors of the head portion,
or to design an image for simultaneously analyzing at least two of the alignment errors of the head portion,
or to design an image for separating alignment errors by degree of freedom while simultaneously analyzing at least two of the alignment errors.

6. The image generation system of claim 5,
wherein the image generation unit comprises:
a first image acquisition unit configured to provide an image for analyzing only one of the alignment errors or an image for separating alignment errors by degree of freedom to a learning unit; and
a first image design unit configured to design the image for analyzing only one of the alignment errors or the image for separating alignment errors by degree of freedom, based on a learning result of the learning unit.

7. The image generation system of claim 6,
wherein the image generation unit further comprises:
a second image acquisition unit configured to provide an image for simultaneously analyzing at least two alignment errors to the learning unit; and
a second image design unit configured to design the image for simultaneously analyzing at least two alignment errors, based on the learning result of the learning unit and the image for separating alignment errors by degree of freedom designed by the first image design unit.

8. The image generation system of claim 1,
wherein the image generation unit is configured to design the image while varying at least one of a shape of the image, a size of the image, a gradient of the image, aperiodicity of image arrangement, and periodicity of image arrangement.

9. The image generation system of claim 8,
wherein the shape of the image is any one selected from a polygonal shape, a circular shape, an elliptical shape, and a sector shape.

10. The image generation system of claim 1,
further comprising a learning unit configured to learn a relationship between images corresponding to alignment errors of the head portion and fast Fourier transform (FFT) results of the images corresponding to the alignment errors.

11. The image generation system of claim 10,
wherein the image generation unit is configured to generate an image for determining the alignment state of the head portion of the optical system based on interdependence between the images corresponding to alignment errors and the FFT results thereof.

12. The image generation system of claim 10,
wherein the image comprises an image generated as an inverse fast Fourier transform (IFFT) result of an image generated as an FFT result,
or an FFT result image of an image for analyzing the alignment error of the head portion,
or an FFT result image of an image for separating alignment errors by degree of freedom of the head portion.

13. The image generation system of claim 10,
wherein the learning unit comprises:
an image processing unit configured to perform a predetermined processing and transformation on images corresponding to alignment errors; and
a learning execution unit configured to perform machine learning or deep learning on the images processed and transformed by the image processing unit.

14. The image generation system of claim 10,
wherein the learning unit is configured to perform learning by using a neural operator method.

15. An alignment error determination system comprising:
the image generation system of claim 1;
an optical system configured to capture the image designed by the image generation system to generate a captured image; and
an alignment determination unit configured to determine an alignment state of a head portion of the optical system based on the captured image.

16. The alignment error determination system of claim 15,
wherein the optical system is applied to a digital micro-mirror device (DMD), a liquid crystal on silicon (LCOS), a light-emitting display (LED), a liquid crystal display (LCD), a nano-imprint head, an inkjet printing head, or an image-modulation or non-modulation head.

17. The alignment error determination system of claim 15,
further comprising an error extraction unit configured to extract an alignment error of the head portion of the optical system based on the captured image,
wherein the error extraction unit comprises an FFT conversion unit configured to perform a fast Fourier transform on the captured image.

18. The alignment error determination system of claim 15,
wherein the learning unit comprises an image judgment unit configured to regenerate an image by applying a pre-learned result to an FFT result of the captured image,
and the error extraction unit is configured to extract the alignment error of the head portion based on the regenerated image.

19. An alignment error determination method comprising:
designing an image for analyzing an alignment error of a head portion or for separating alignment errors of the head portion according to degrees of freedom, based on a learning result with respect to images corresponding to alignment errors of the head portion;
capturing the designed image in an optical system to generate a captured image; and
determining an alignment state of the head portion of the optical system based on the captured image.

20. The alignment error determination method of claim 19,
further comprising, prior to the step of designing the image,
learning a relationship between images corresponding to alignment errors of the head portion and fast Fourier transform (FFT) results of the images corresponding to the alignment errors.
